# EUROPEAN PATENT SPECIFICATION

(11) **EP 4 360 435 B1**
(45) Date of publication and mention of the grant of the patent: **04.06.2025**
(21) Application number: 23203610.3
(22) Date of filing: 13.10.2023
(51) Int. Cl.: A01D 41/127, A01D 45/02

(54) **SYSTEMS AND METHODS TO ADJUST OPERATION OF AN AGRICULTURAL SYSTEM**
SYSTEME UND VERFAHREN ZUR ANPASSUNG DES BETRIEBS EINES LANDWIRTSCHAFTLICHEN SYSTEMS
SYSTÈMES ET PROCÉDÉS POUR RÉGLER LE FONCTIONNEMENT D'UN SYSTÈME AGRICOLE

(30) Priority: 14.10.2022 US 202263416092 P
(43) Date of publication of application: 01.05.2024
(73) Proprietor: CNH Industrial America LLC, New Holland, PA 17557 (US)
(72) Inventor: MISSOTTEN, Bart M. A., New Holland, 17557 (US); JONGMANS, Dre Waltherus Joachim, New Holland, 17557 (US); LEENKNEGT, Arno, New Holland, 17557 (US); HUNT, Cory Douglas, New Holland, 17557 (US); MARTIN, Jethro, New Holland, 17557 (US); LINDE, Karl Robert, New Holland, 17557 (US); WALKER, Eric Lee, New Holland, 17557 (US)
(74) Representative: CNH Industrial IP Department

(56) References cited:
- EP-A1- 2 936 963
- EP-B1- 1 005 264
- EP-B1- 2 887 792

## Description

### BACKGROUND OF THE INVENTION

The present disclosure generally relates to an agricultural system and, more particularly, to operating an agricultural header of the agricultural system to process crop materials.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester is used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header is designed to efficiently harvest corn. The corn header may include row units that include components that operate to separate ears of corn from stalks as the harvester travels through a field. Conveyors (e.g., augers) carry the ears of corn toward processing machinery and/or storage compartments of the harvester, while the stalks are deposited back into the field.

For example, European patent application EP 2 936 963 A1 discloses a harvester with a header including a plurality of row units, a plurality of feed/snapping units, and a plurality of chopping units. Each feed/snapping unit is associated with a respective said row unit and operable at a first operating speed. Each chopping unit is associated with at least one respective feed/snapping unit and operable at a constant second operating speed, independent of the first operating speed.

### SUMMARY OF THE INVENTION

The invention is defined by the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective view of a header that may be employed within the agricultural system of FIG. 1, in accordance with an embodiment of the present disclosure;
FIG. 3 is a perspective front view of a portion of the header of FIG. 2, in accordance with an embodiment of the present disclosure;
FIG. 4 is a perspective bottom view of a portion of the header of FIGS. 2 and 3, in accordance with an embodiment of the present disclosure;
FIG. 5 is a view of an interface that may be utilized to adjust operation of the agricultural system of FIG. 1, in accordance with an embodiment of the present disclosure;
FIG. 6 is a flowchart of a method for operating the agricultural system of FIG. 1 based on a characteristic of a material other than grain (MOG) processed by the agricultural system of FIG. 1, in accordance with an embodiment of the present disclosure; and
FIG. 7 is a flowchart of a method for operating the agricultural system of FIG. 1 based on congestion of crop material processed by the agricultural system of FIG. 1, in accordance with an embodiment of the present disclosure.

### DETAILED DESCRIPTION

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units arranged across a width of the corn header, and each row unit may include deck plates, stalk rollers, other component(s), or a combination thereof, that operate to separate ears of corn from stalks and materials other than grain (MOG) as the harvester travels through the field. Conveyors (e.g., augers) carry the ears of corn into the harvester (e.g., a chassis of the harvester), such as toward processing machinery and/or storage compartments of the harvester, for further processing.

The corn header may also process the MOG to discharge the MOG back onto the field. For example, the corn header may reduce the MOG into finer particles and distribute the particles of the MOG across the field. Such processing of the MOG may facilitate subsequent cleanup of the MOG during preparation of further harvesting operations. Unfortunately, it may be difficult to operate the agricultural system to process the MOG in a desirable manner. For example, in existing approaches, a user (e.g., an operator) may manually monitor processing of the MOG to adjust operation of the agricultural system. However, such responsibilities may be tedious and/or challenging to fulfill in addition to performing other tasks associated with operating the agricultural system. As a result, the agricultural system may process the MOG in an undesirable manner.

Thus, it is presently recognized that automatically adjusting operation of the agricultural system to process the MOG may improve the property of the MOG discharged onto the field, while limiting resource consumption associated with processing the MOG. Accordingly, the present embodiments relate generally to systems and methods for automatically determining characteristic(s) of the MOG and adjusting operation of the agricultural system based on the characteristic(s). The agricultural system may include or be communicatively coupled to a control system configured to determine a characteristic of the MOG and control operation of the agricultural system accordingly. As an example, the characteristic of the MOG may include a size of the MOG discharged from the agricultural system. In response to the size of the MOG being above a threshold value, the control system may output the control signal to improve cutting of the MOG and further reduce the size of the MOG prior to discharge.

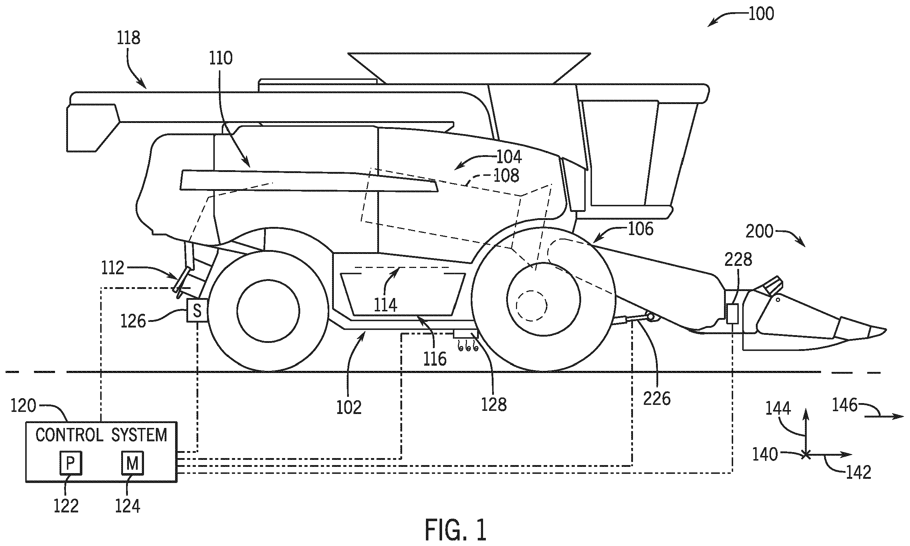

With the foregoing in mind, FIG. 1 is a side view of an embodiment of an agricultural system 100, which is a harvester. The agricultural system 100 includes a chassis 102 configured to support a header 200 (e.g., a corn header) and an agricultural crop processing system 104. The header 200 is configured to receive crops (e.g., corn) from a field and to transport the crops toward an inlet 106 of the agricultural crop processing system 104 for further processing of the crops. The header 200 may also separate desirable crop material from MOG (e.g., stems, leaves, stalks, husks, pods, other crop residue). The agricultural crop processing system 104 receives the crops from the header 200 for further processing. For example, the agricultural crop processing system 104 includes a thresher 108 having a cylindrical threshing rotor that transports the crops in a helical flow path through the agricultural system 100. In addition to transporting the crops, the thresher 108 further separates certain desirable crop material (e.g., corn) from the MOG and enables the desirable crop material to flow into a cleaning system 114 (e.g., including sieves) located beneath the thresher 108. The cleaning system 114 removes debris from the desirable crop material and transport the desirable crop material to a storage tank 116 within the agricultural system 100. When the storage tank 116 is full, a tractor with a trailer may be positioned alongside the agricultural system 100. The desirable crop material collected in the storage tank 116 may be transported by an elevator to an unloader 118 and delivered from the unloader 118 into the trailer.

The header 200 may directly distribute/discharge the MOG to the field to avoid entry of the MOG into certain parts of the chassis 102, such as the agricultural crop processing system 104. In some embodiments, the agricultural system 100 includes a MOG handling system 110 that receives any MOG (e.g., the MOG directed by the thresher 108) that is not directly discharged from the header 200, and the MOG handling system 110 transports the MOG to a MOG spreading system 112 positioned at an aft end of the agricultural system 100. The MOG spreading system 112 distributes the MOG onto the field to facilitate performance of other operations. Distribution of the MOG onto the field facilitates a subsequent operation that removes, chops, buries, or otherwise processes the MOG for subsequent preparation of the field. To facilitate discussion herein, the header 200 is described with reference to a lateral axis or direction 140, a longitudinal axis or direction 142, and a vertical axis or direction 144.

The agricultural system 100 also includes a control system 120 (e.g., an automation controller, an electronic controller, a programmable controller, a cloud computing system, control circuitry) with a processor 122 (e.g., processing circuitry) and memory 124. The processor 122 is used to execute software code or instructions stored on the memory 124, such as to process signals, control the agricultural system, and/or control the header 200. The term "code" or "software code" used herein refers to any instructions or set of instructions that control the operation of the control system 120. The code or software code exists in a computer-executable form, such as machine code, which is the set of instructions and data directly executed by the processor 122 of the control system 120, humanunderstandable form, such as source code, which is compiled in order to be executed by the processor 122 of the control system 120, or an intermediate form, such as object code, which is produced by a compiler.

As an example, the memory 124 may store processor-executable software code or instructions (e.g., firmware or software), which are tangibly stored on a non-transitory computer readable medium. Additionally or alternatively, the memory may store data. As an example, the memory 124 may include a volatile memory, such as random access memory (RAM), and/or a nonvolatile memory, such as read-only memory (ROM), flash memory, a hard drive, or any other suitable optical, magnetic, or solid-state storage medium, or a combination thereof. Furthermore, the processor 122 may include multiple microprocessors, one or more "general-purpose" microprocessors, one or more specialpurpose microprocessors, and/or one or more application specific integrated circuits (ASICS), or some combination thereof. For example, the processor 122 may include one or more reduced instruction set (RISC) or complex instruction set (CISC) processors. The processor 122 may include multiple processors, and/or the memory 124 may include multiple memory devices. The processor 122 and/or the memory 124 may be located in any suitable portion of the agricultural system 100 (e.g., a cab of the agricultural system 100 and/or on the header 200). Further, the control system may be a distributed controller with the multiple processors and/or the multiple memory devices in separate housings or locations (e.g., in the agricultural system, in the header, in a remote location, in the cloud).

The control system 120 is communicatively coupled to the MOG spreading system 112 and to the header 200. Thus, the control system 120 is configured to operate the MOG spreading system 112 and/or the header 200 to control processing of the MOG. As an example, the control system 120 is configured to output a control signal to adjust operation of the MOG spreading system 112 to control distribution of the MOG discharged by the agricultural system 100 onto the field. For instance, the MOG spreading system 112 may include a blower, a conveyor, a spreader, any other suitable component(s), or a combination thereof, and the control system 120 is configured to output the control signal to adjust an operation of the MOG spreading system 112 to adjust distribution of the MOG (e.g., to increase an operating speed of the MOG spreading system 112, such as a spreader or blower of the MOG spreading system 112, to increase distribution of the MOG). As another example, the control system 120 may output a control signal to adjust operation of the header 200 to adjust the size of the MOG output by the header 200 (e.g., for direct discharge onto the field). For instance, as discussed herein, the header 200 may include blades that chop the MOG into finer particles, and the control system 120 may output the control signal to adjust operation of the blades to adjust the size of the particles of the MOG (e.g., to reduce the MOG into smaller particles).

In some embodiments, the control system 120 is configured to output the control signal to adjust the operation of the MOG spreading system 112 and/or of the header 200 automatically. To this end, the control system 120 is communicatively coupled to one or more sensors 126 configured to monitor one or more characteristics of the MOG. By way of example, the control system 120 uses sensor data output by the sensor(s) 126 to determine one or more characteristics of the MOG, including a size of the MOG (e.g., MOG processed by the header 200), a distribution of the MOG on the field, other suitable characteristic(s), or any combination thereof. For instance, the sensor(s) 126 may include optical sensor(s) (e.g., camera(s)), radar sensor(s), lidar sensor(s), terahertz sensor(s), other suitable type(s) of sensor(s), or a combination thereof, and the sensor(s) 126 may be positioned underneath the chassis 102, behind the chassis 102 (e.g., adjacent to the MOG spreading system 112), otherwise oriented to face the field to facilitate determination of characteristic(s) of the MOG, or a combination thereof. The sensor(s) 126 are configured to output sensor data indicative of the monitored characteristic(s) to the control system 120, and the control system 120 operates based on the received sensor data. For example, the control system 120 is configured to output a control signal to adjust operation of the MOG spreading system 112 and/or of the header 200 in response to determining at least one characteristic determined based on the sensor data is outside of a range of values. In additional or alternative embodiments, the control system may output the control signal in response to receipt of a user input. For example, the agricultural system may include a user interface (e.g., disposed in a cab), which may include a touchscreen, a dial, a lever, a switch, a button, a trackpad, a mouse, and the like, and the control system may receive the user input based on an interaction between a user (e.g., an operator) and the user interface. The user input may, for instance, include a request for directly adjusting operation of the MOG spreading system and/or of the header (e.g., regardless of the characteristic(s) of the MOG monitored by the sensor(s)). The control system may also be configured to output a control signal to adjust operation of another element of the agricultural system. For example, the control signal may be indicative of instructions to provide a notification (e.g., a visual output, an audio output, a communication transmitted to a mobile device) that may prompt a user to manually adjust and/or inspect operation of the agricultural system.

In certain embodiments, the sensor(s) may monitor characteristic(s) of upcoming crops to be harvested by the agricultural system. Thus, the control system may receive information regarding the MOG that is still intact and attached to the field (e.g., the soil), such as of crops that are upstream of the agricultural system relative to a direction of travel of the agricultural system. As such, the control system may adjust operation in anticipation of processing the upcoming MOG to improve size reduction and/or distribution of the MOG. That is, the control system may dynamically adjust operations to process the MOG in a more suitable manner based on the detected characteristic(s) of the upcoming MOG.

In further embodiments, the sensor(s) may monitor positioning of the MOG with respect to the agricultural system to determine whether there are congestions or blockages of the MOG, such as the MOG being processed or already processed by the header. Such congestions may indicate undesirable operation of the agricultural system. For example, a congestion at the header may indicate an insufficient speed of operation of a roller of the header to reduce the size of the MOG and to discharge the MOG onto the field. A congestion at the MOG spreading system may indicate an insufficient speed of operation of a spreader of the MOG spreading system to output the MOG and/or an insufficient speed of operation of the roller of the header or other component to deliver the MOG to the MOG spreading system for discharge from the agricultural system. The sensor(s) may output sensor data indicative of a detected congestion, including a location of the detected congestion, to the control system, and the control system may output the control signal based on the detected congestion. For instance, the control signal may adjust operation of the header and/or of the MOG spreading system to reduce congestion and improve MOG processing operations. Additionally or alternatively, the control signal may adjust operation of another component of the agricultural system to reduce congestion. By way of example, discharged MOG that is inadequately distributed on the field may be lodged between the field and the agricultural system (e.g., an underside of the chassis) to affect (e.g., obstruct) navigation by the agricultural system. The control system may detect such a congestion based on the sensor data, and the control system may output the control signal to adjust operation of an air mover 128 (e.g., a fan, a blower) to output air that causes movement of the MOG about the field (e.g., underneath the chassis) and reduce the congestion.

Further still, the control system may adjust a travel speed (e.g., ground speed) of the agricultural system based on the received sensor data. For example, increased travel speed may cause the engagement between the header (e.g., the row units) and the crops to increase bending of the stalks of the crops before cutting the stalks for intake of the crops. Increased bending of the stalk prior to cutting may cause a relatively taller stalk to remain in the soil. The relatively taller stalk may hinder subsequent operations to process the MOG on the field and/or otherwise affect operations to prepare the field for additional harvesting operations.

It should be noted that the operation of the agricultural system 100 effectuated by the control system 120 may enable the agricultural system 100 to process the MOG in a desirable manner without causing excessive resource consumption (e.g., of fuel, of electricity) by the agricultural system 100. By way of example, increasing operation (e.g., an operating speed of a spreader) of the MOG spreading system 112 and/or of the header 200 may process the MOG more desirably, such as by improving distribution of the MOG and/or reducing a size of the MOG, but may also increase resource consumption by the agricultural system 100. For this reason, the control system 120 may output the control signal to achieve desirable characteristic(s) of the MOG without causing substantial resource consumption by the agricultural system 100. For example, in response to determining that a characteristic (e.g., size, distribution, congestion) of detected MOG is undesirable (e.g., outside of a desirable range), the control system 120 may output the control signal to incrementally or gradually increase operation of the agricultural system 100 until the characteristic is desirable (e.g., within the desirable range) and no additional resources beyond the resources consumed to achieve the desirable characteristic are consumed.

The control system 120 may also operate other components of the agricultural system 100. For example, the control system 120 may determine an amount of crop material (e.g., based on sensor data received from the sensor(s) 126 or from additional sensor(s), such as optic sensor(s), flow sensor(s), force sensor(s), weight sensor(s), or contact sensor(s)) being transported to the inlet 106 for processing by the thresher 108, and the control system 120 may operate the thresher 108 based on the amount of crop material. In some embodiments, the control system 120 may output a control signal to increase a processing speed of the thresher 108 in response to determining the amount of crop material is above a threshold value, thereby increasing operation of the thresher 108 to process the crop material and separate desirable crop material from MOG. In this way, the thresher 108 may operate more suitably to process the increased amount of crop material. The control system 120 may also output a control signal to reduce the processing speed of the thresher 108 in response to determining the amount of crop material is below a threshold value, thereby reducing resource consumption associated with the operation of the thresher 108. As such, the thresher 108 may operate without expending additional resources than that used to sufficiently process the reduced amount of crop material.

The agricultural system 100 also includes one or more actuators configured to control the spatial orientation and/or position of the header 200 with respect to the chassis 102 and/or with respect to the crop rows/ground/soil. A header height actuator 226 may drive the header 200 to move along the vertical axis 144 relative to the ground. The header 200 is attached to the chassis 102 via a linkage. The position of the linkage may be controlled by the header height actuator 226 to adjust the height of the header 200. The agricultural system 100 may also include a header orientation actuator 228. The header orientation actuator 228 may be configured to rotate the header 200 (e.g., the entire header 200 or a portion thereof) relative to the ground. The control system 120 is communicatively coupled to the actuators 226, 228 and may control the actuators 226, 228 to adjust operation of the agricultural system 100, such as based on sensor data indicative of one or more environmental variables (e.g., MOG characteristic(s), soil condition(s), terrain, crop damage). The agricultural system 100 and/or its components may also be described with reference to a direction of travel 146.

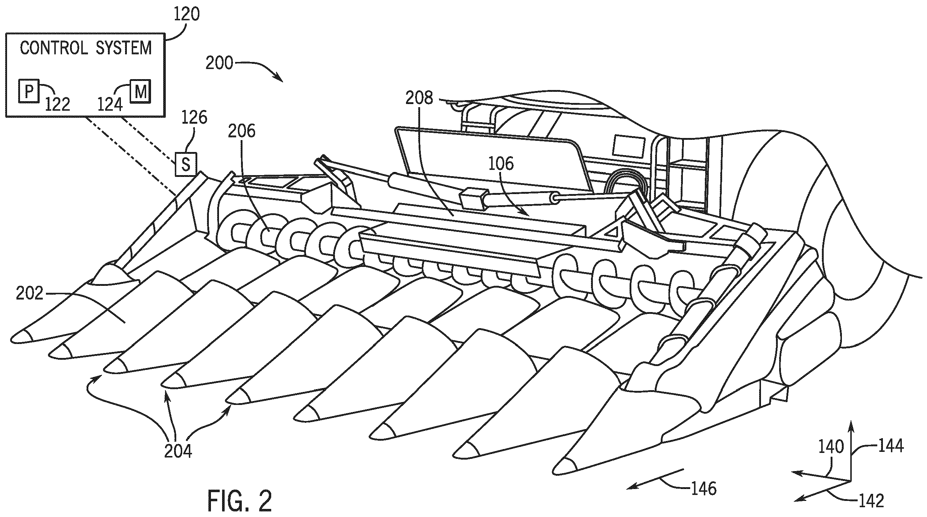

FIG. 2 is a perspective view of an embodiment of the header 200 that is employed within the agricultural system of FIG. 1. In the illustrated embodiment, the header 200 is a corn header and includes multiple dividers 202 configured to separate rows of a crop (e.g., corn). The dividers 202 are distributed across a width of the header 200 (e.g., along the lateral axis 140). As the header 200 moves along a path, the dividers 202 direct the crops from each row to row units 204. The row units 204 are configured to receive each crop (e.g., a stalk). A portion of the crops are directed to one of a pair of conveyors 206 (e.g., augers) configured to convey the portion of crops laterally inward to a center crop conveyor 208 at a center of the header 200, and the center crop conveyor 208 directs the portion of crops toward the inlet 106 of the agricultural crop processing system. As illustrated, the conveyors 206 extend along a substantial portion of the width of the header 200 (e.g., along the lateral axis 140). The conveyors 206 are driven by a drive mechanism (e.g., electric motor, hydraulic motor).

The header 200 separates the desirable crop material and MOG from one another to facilitate directing the desirable crop material into the agricultural crop processing system via the inlet 106 and to block entry of the MOG into the agricultural crop processing system via the inlet 106. For example, operation of the row units 204 may direct the desirable crop material to the conveyors 206 and discharge the MOG away from the conveyors 206, such as discharging the MOG directly onto the field. The control system 120 operates the row units 204 to cut crops, separate the MOG from the desirable crop material, discharge the MOG (e.g., onto the field), or a combination thereof. For example, as discussed herein, the control system 120 is configured to output a control signal to adjust operation of the row units 204 independently from one another based on sensor data received from the sensor(s) 126 and/or based on a user input.

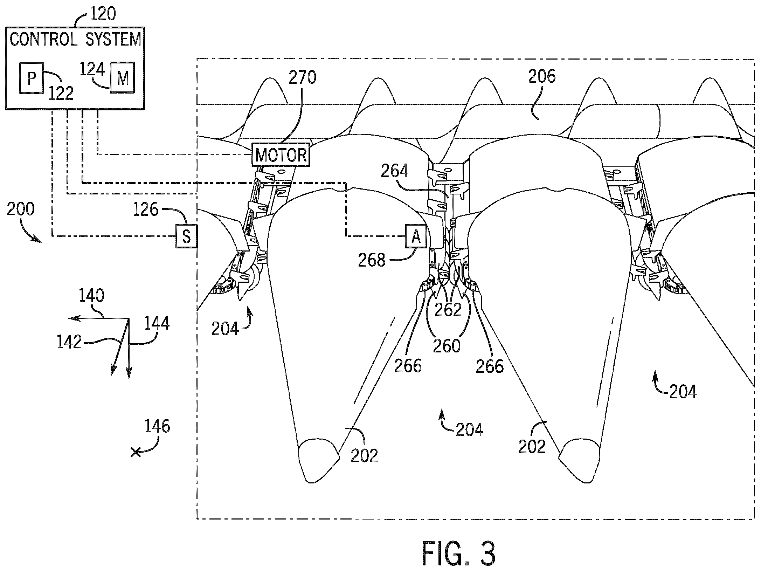

FIG. 3 is a perspective front view of a portion of the header 200 of FIG. 2. As shown, the portion of the header 200 includes the dividers 202 that direct the crops to the row units 204. Each row unit 204 includes various components that operate to separate the corn from the MOG, carry the corn toward the conveyors 206, and return the MOG to the field. For example, each row unit 204 includes a pair of feed rollers 260 (e.g., snap rollers, stalk rollers, pick rollers) that are configured to grip the crop (e.g., stalk) and rotate in opposite rotational directions to drive the MOG of the crop toward the field (e.g., vertically downward along the vertical axis 144; below the header 200) for discharge from the header 200. Each row unit 204 also includes a pair of deck plates 262 that are positioned over the pair of feed rollers 260. Each deck plate 262 extends from a first end to a second end along the longitudinal axis 142, and the pair of deck plates 262 are separated from one another along the lateral axis 140 to define a gap 264. The pair of deck plates 262 are spaced apart so that the gap 264 is sized to enable the MOG to move through the gap 264, but to block the desirable crop material (e.g., ears of corn) from moving through the gap 264. That is, the deck plates 262 receive the desirable crop material and block entry of the desirable crop material through the gap 264. Further, each row unit 204 includes a pair of chains 266 (e.g., with lugs) that are configured to drive or push the desirable crop material along the pair of deck plates 262 toward the conveyors 206. In some embodiments, the pair of deck plates 262 are adjustable and are driven (e.g., via an actuator) toward and away from one another along the lateral axis 140 to change a size of the gap 264 (e.g., a width along the lateral axis 140).

The control system 120 is configured to operate the row units 204 to separate the desirable crop material from the MOG and/or to direct the desirable crop material through the agricultural system. In some embodiments, the size of the gap 264 and/or the speed of the feed rollers 260 may be adjusted to control separation between the desirable crop material and the MOG. As an example, the control system 120 may be communicatively coupled to a deck plate actuator 268, and the control system 120 controls the deck plate actuator 268 to drive the pair of deck plates 262 toward and away from one another along the lateral axis 140 to control a size of the gap 264, such as to reduce the size of the gap 264 to block movement of the desirable crop material through the gap 264 while enabling discharge of the MOG from the header 200 via the gap 264. As another example, the control system 120 may be communicatively coupled to a feed roller motor 270 and controls the feed roller motor 270 to control the rotational speed of respective feed rollers 260. For instance, increasing the rotational speed of the feed rollers 260 increases movement of the crop to increase the rate at which the MOG is discarded and to increase the rate at which desirable crop material is moved through the agricultural system for further processing. However, increasing the rotational speed of the feed rollers 260 also increases the speed at which the desirable crop material impacts the deck plates 262 and potentially deflect a portion of the desirable crop material off the deck plates 262 and out of the header 200. Thus, a target rotational speed of the feed rollers 260 may be determined based on a desirable or target rate for processing the crop by the header 200 and/or based on a threshold amount of desirable crop material that is lost from impact with the deck plates 262.

Additionally or alternatively, the control system may operate the row units based on a detected congestion. For example, during operation, the agricultural system navigates in the direction of travel 146 to gather multiple rows of crops. The travel speed of the agricultural system in the direction of travel 146 affects discharge of the MOG by the row units. For example, increased travel speed relative to the rotational speed of the feed rollers may cause gathered crops to bunch or cluster within a row unit, thereby reducing the ability of the feed rollers to discharge the MOG from the header. As a result, the gathered crops may cause congestion at the row unit and hinder operation to intake crops at a desirable rate for processing. For this reason, in response to detected congestion at one of the row units, the control system may output a control signal to the feed roller motor(s) to increase speed of the feed rollers (e.g., relative to the travel speed), thereby discharging the MOG more quickly to reduce the detected congestion and/or subsequent congestion.

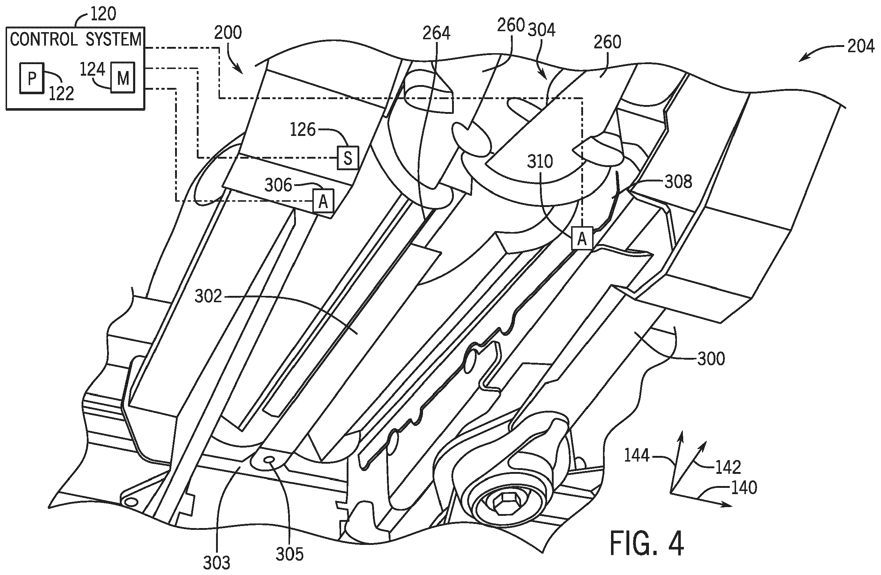

FIG. 4 is a perspective bottom view of a portion of the header 200 of FIGS. 2-3. The header 200 includes a chopper 300 configured to rotate to cut stalks/MOG that are being directed downwardly by the feed rollers 260. As discussed herein, the feed rollers 260 direct the MOG downwardly through the gap 264 for discharge from the header 200. While the feed rollers 260 direct the MOG through the gap 264, the chopper 300 continues to cut the MOG, thereby reducing a size of the MOG being discharged from the header 200. In additional or alternative embodiments, the feed rollers may include blades, knives, discs, or a combination thereof, that cut the MOG during rotation of the feed rollers to reduce the size of the MOG (e.g., prior to or without cutting by the chopper).

The control system 120 may be communicatively coupled to the chopper 300 and may operate the chopper 300 to cut the MOG. For example, the control system 120 may output a control signal to increase the rotational speed of the chopper 300 (e.g., relative to the rotational speed of the feed rollers 260) to cut the MOG more finely (e.g., the particles of cut MOG is relatively smaller), such as in response to receiving sensor data indicative of the discharged MOG being above a threshold size. The control system 120 may also output a control signal to reduce the rotational speed of the chopper 300 to cut the MOG more coarsely (e.g., the particles of cut MOG is relatively larger), such as in response to receiving sensor data indicative of the resource consumption by the agricultural system being above a threshold value.

The header 200 also includes a counter knife 302 (e.g., a counter blade), which facilitates operation of the chopper 300 in cutting the MOG. For example, the counter knife 302 supports the MOG being moved by the feed rollers 260 and provide resistance to enable the chopper 300 to cut the MOG more easily. For example, the chopper 300 cuts the MOG against the counter knife 302 such that each of the chopper 300 and the counter knife 302 imparts a force against the MOG to cut the MOG. As such, the counter knife 302 improves operation of the chopper 300. The counter knife 302 is coupled to the row unit 204, such as to a support 303, and extends toward a front end 304 (e.g., an upstream end, a tip) of the header 200, such as generally in the longitudinal axis 142. Thus, a portion of the counter knife 302 overlaps with the chopper 300 during rotation of the chopper 300 to enable the counter knife 302 to contact and support the MOG being cut by the chopper 300.

In some embodiments, the position of the counter knife 302 is adjustable. For example, the counter knife 302 may be coupled to the support 303 at a pivot 305, and the counter knife 302 be rotated about the vertical axis 144 at the pivot 305 to adjust a direction of extension of the counter knife 302. Such movement of the counter knife 302 adjusts an overlap between the counter knife 302 and the chopper 300 during rotation of the chopper 300. For example, the counter knife 302 is moved to adjust a force imparted by the counter knife 302 onto the MOG, to adjust a location (e.g., along a length of the feed rollers 260, along a length of the MOG) where the counter knife 302 engages the MOG, or to otherwise adjust how the MOG is cut via the chopper 300. Movement of the counter knife 302 to increase extension toward the front end 304 (e.g., to extend more in the longitudinal direction 142) enables the chopper 300 to cut the MOG more aggressively (e.g., more finely into relatively smaller particles). Movement of the counter knife 302 to reduce extension toward the front end 304 (e.g., to extend more in the lateral direction 140) reduces cutting aggression by the chopper 300 (e.g., to cut the MOG more coarsely into relatively larger particles). The control system 120 may be communicatively coupled to a counter knife actuator 306 and output a control signal to instruct the counter knife actuator 306 to adjust the position of the counter knife 302. By way of example, the control system 120 may output the control signal based on sensor data indicative of a size of discharged MOG and/or detected congestion of the MOG in the row unit 204. In alternative embodiments of the agricultural system, the counter knife may have a different configuration (e.g., the counter knife may have a different geometry, such as a triangular shape), the counter knife may be moved in a different manner (e.g., translated toward or away from the front end 304), or the counter knife may be omitted.

The header 200 further includes one more anti-wrap knives 308. The anti-wrap knife/knives 308 block entanglement of the MOG around the feed rollers 260. As an example, a respective anti-wrap knife 308 may be positioned laterally adjacent to each feed roller 260. A portion of the MOG may remain in engagement with one of the feed rollers 260 during rotation of the feed roller 260, such that the MOG is at least partially wrapped about the feed roller 260, potentially bypassing the chopper 300. However, the anti-wrap knife 308 adjacent to the feed roller 260 cuts the MOG to block continued movement of the MOG about the feed roller 260, thereby enabling discharge of the MOG from the header 200. That is, rotation of the feed roller 260 drives the MOG toward the anti-wrap knife 308, which cuts the MOG and block the MOG from further entangling about the feed roller 260.

The anti-wrap knife 308 is positioned with respect to the feed roller 260 to provide clearance between the feed roller 260 and the anti-wrap knife 308 while enabling the anti-wrap knife 308 to cut the MOG into sufficiently fine particles. For example, too much clearance between the feed roller 260 and the anti-wrap knife 308 may not enable the anti-wrap knife 308 to cut smaller sized MOG. Thus, presence of larger sized MOG (e.g., the MOG that was not cut by the anti-wrap knife 308 or the chopper 300 before discharge) on the field may indicate excessive clearance between the feed roller 260 and the anti-wrap knife 308, even though the chopper 300 may be operating as desired. Thus, the size of the MOG detected by the sensor(s) 126 may indicate the clearance between the feed roller 260 and the anti-wrap knife 308 is undesirable (e.g., above a threshold value). Thus, detection of discharged MOG having a size above a threshold size while the chopper 300 is operating at above a threshold speed may indicate that the clearance between the anti-wrap knife 308 and the adjacent feed roller 260 is above a threshold value. In response to receipt of the sensor data, the control system 120 may output a notification to inform a user to inspect positioning of the anti-wrap knife 308. Additionally or alternatively, the control system may adjust an operation of the header and/or of the agricultural system, such as to automatically adjust a positioning of the anti-wrap knife with respect to the feed roller via an anti-wrap knife actuator 310.

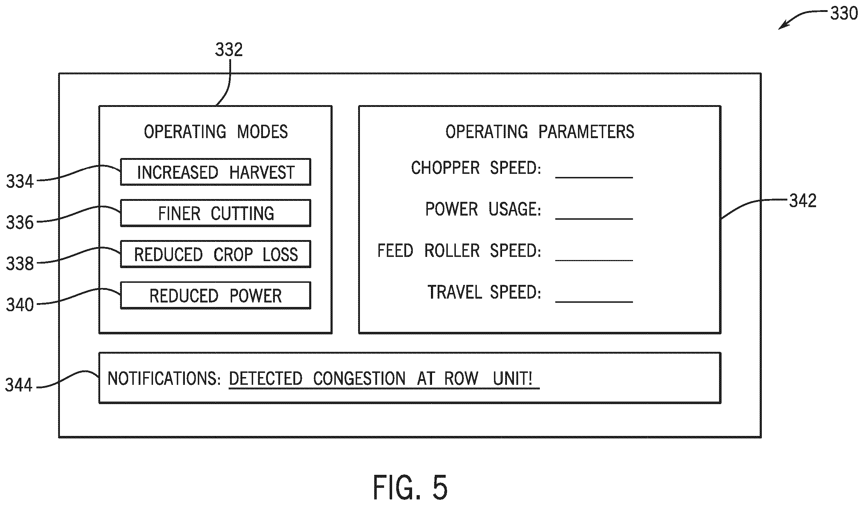

FIG. 5 is a view of an embodiment of an interface 330 that may be utilized to adjust operation of the agricultural system of FIG. 1. The interface 330 is accessible to a user of the agricultural system. For example, the interface 330 is disposed within the cab of the agricultural system in which the user is positioned. The interface 330 may include a display (e.g., a touchscreen) in some embodiments. In additional or alternative embodiments, the interface may include additional/different component(s), such as mechanical device(s) (e.g., button(s), switch(es), knob(s)). The interface 330 is communicatively coupled to the control system of the agricultural system.

As discussed herein, operations of different components of the header are adjusted to achieve different target operating parameter values, such as within a target range of values. For example, increasing the speed of the chopper cuts the MOG more finely to reduce the size of the MOG particles, but utilizes more power and therefore increase consumption of resources. Indeed, adjusting operation of a component may adjust a value of a first operating parameter toward a corresponding target value (e.g., reduce size of the MOG particles) and also change a value of a second operating parameter (e.g., increase resource consumption). Thus, operations may be controlled based on a desirable performance of the agricultural system to achieve a particular target operating parameter value. In some embodiments, the agricultural system may be operated in different operating modes (e.g., agricultural modes) associated with achieving different target operating parameter values. Such operating modes may be selected by an interaction between a user and the interface 330, such as via tactile input provided by the user. The control system receives the user input, determines the operating mode selected by the user based on the user input, and adjusts the operation of the agricultural mode based on the operating mode.

For example, the interface 330 includes a menu 332 that includes various operating modes of the agricultural system. The menu 332 may include multiple icons that are selectable by a user to indicate a desired operating mode for implementation. For example, the menu 332 includes a first icon 334 associated with increased harvesting, a second icon 336 associated with finer cutting of the MOG, a third icon 338 associated with reduced loss of desirable crop material, a fourth icon 340 associated with reduced power usage and resource consumption, or a combination thereof. Additional or alternative operating modes may also be presented by the interface. The operating mode of each icon 334, 336, 338, 340 is associated with corresponding, respective operational adjustments of the agricultural system to adjust an operating parameter toward a target value, and selection of one of the icons 334, 336, 338, 340 causes the control system to adjust the operation of the agricultural system in accordance with the operating mode of the selected icon.

Selection of the first icon 334 may cause the control system to control the agricultural system to increase the rate at which crops are harvested and processed (e.g., to remove crop from soil, to separate desirable crop material from the MOG, to discharge the MOG). As such, upon receiving a user input that the first icon 334 is selected, the control system may output one or more control signals to increase speed of the feed rollers to increase a rate at which crop is removed from soil and is moved through the header to separate desirable crop material and the MOG. The control signal(s) may also increase speed of the chains to deliver the desirable crop material to the conveyors more quickly, increase speed of the conveyors to deliver the desirable crop material into the agricultural crop processing system more quickly, increase travel speed of the agricultural system to engage and gather the crops more quickly, increase operation of the agricultural crop processing system (e.g., the thresher) to process crops more quickly, or a combination thereof.

Selection of the second icon 336 may cause the control system to control the agricultural system to cut the MOG into smaller particles. That is, the agricultural system may further reduce the size of the MOG being discharged upon selection of the second icon 336. For example, the control system may output one or more signals to increase the speed of the chopper to cut the MOG more finely, adjust positioning of the counter knife to enable the chopper to cut the MOG into smaller particles, or a combination thereof.

Selection of the third icon 338 may cause the control system to control the agricultural system to reduce loss of desirable crop material caused by impact between the crop and the deck plates. As an example, the control system may output one or more control signals to reduce a speed of the feed rollers to reduce a speed at which the crop impacts the deck plates.

Selection of the fourth icon 340 may cause the control system to control the agricultural system to reduce power usage and resource consumption. By way of example, the control system may output one or more control signals that reduce the speed of various components, such as to reduce a speed of the feed rollers, to reduce a speed of the chopper, to reduce the travel speed, to reduce the speed of the chain, to reduce the speed of the conveyors, or a combination thereof. The control signal(s) may also adjust operation of other components to reduce power usage, such as to reduce operation of the thresher, of the cleaning system, of the MOG spreading system, of any other component(s) that may consume resources to operate, or a combination thereof.

In some embodiments, selection of the icons 334, 336, 338, 340 may cause the control system to adjust operation of the agricultural system incrementally or gradually. For example, a single selection of the first icon 334 may cause the control system to adjust operation of a component of the agricultural system by a fixed amount (e.g., to increase operation by a fixed speed), such as to increase the rate at which the agricultural system harvests crops, and an additional selection of the first icon 334 may cause the control system to adjust operation of the component by an additional fixed amount, such as to further increase the rate at which the agricultural system harvests crops. In this manner, the icons 334, 336, 338, 340 are selected by the user to adjust operation of the agricultural system iteratively, progressively, or finely for increased control. The fixed amount may be an amount established or adjusted based on a user input, based on sensor data (e.g., a characteristic of the MOG), or both. In additional or alternative embodiments, an icon may be associated with an operating setting of a component of the agricultural system, and selection of the icon causes the control system to adjust operation of the component toward the operating setting (e.g., regardless of a current operating setting of the component). In such embodiments, an additional selection of the icon while the component is at the operating setting may not further adjust the operation of the component.

Multiple operating modes may also be selected by the user to adjust operation of the agricultural system. By way of example, selection of the fourth icon 340 may reduce a speed of operation of various components of the agricultural system to reduce power usage. Additionally, selection of the third icon 338 may further reduce a speed of operation of the feed rollers while maintaining the reduced speed of operation of other components associated with reduced power usage. In this way, the adjusted operation of the agricultural system may enable multiple target operating parameter values to be achieved.

The interface 330 also includes multiple windows that display information to a user. For example, a first window 342 may textually display various operating parameter information, such as the speed of the chopper, the power usage, the speed of the feed rollers, the travel speed, the speed of the conveyors, the position of the counter knife, another suitable operating parameter, or any combination thereof. The user may utilize such information to determine a current operation of the agricultural system, such as whether the agricultural system is operating as desired to achieve a target operating parameter value associated with a selected operating mode. As an example, based on the information presented by the first window 342, the user may determine that the power usage is excessive and, in response, select the fourth icon 340 to reduce the power usage by the agricultural system. As another example, based on the information presented by the first window 342, the user may determine that the power usage is not sufficiently reduced upon selection of the fourth icon 340, and inspect operation of the agricultural system to determine the cause of the continued excessive power usage, such as to determine whether there is a congestion or a blockage.

In additional or alternative embodiments, the operating parameters may be presented in another manner. For example, the interface may present a video feed of the operation of the components, of the crop material processed by the agricultural system, of the MOG discharged and distributed on the field, or a combination thereof. The user may also utilize such information to determine whether the agricultural system is operating as desired, such as that the operation of the agricultural system is adjusted upon selection of an operating mode and/or that a target operating parameter value associated with a selected operating mode is achieved.

The interface 330 further includes a second window 344 that may display a notification, which is presented as a result of an information signal output by the control system. For example, the information system may output the control signal based on received sensor data. The notification may include any sort of information, such as a detected congestion, an excessive power usage, a characteristic of an upcoming crop to be harvested, and so forth, that may prompt a user to adjust operation of and/or inspect the agricultural system. For instance, the notification may prompt the user to select an operating mode via the menu 332 to adjust the operation of the agricultural system. In additional or alternative embodiments, a notification may be presented in a different manner, such as via a different visual output (e.g., an emitted light), via an audio output, via tactile feedback, via communication to a mobile device, and so forth.

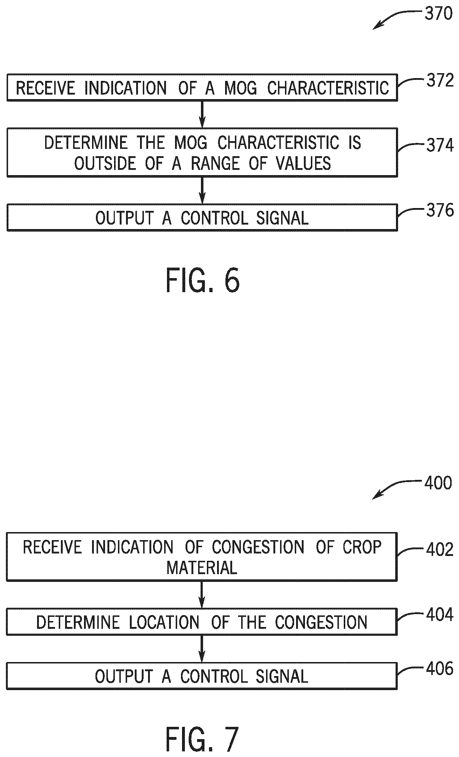

Each of FIGS. 6 and 7 discussed below presents a respective method for operating the agricultural system. In some embodiments, each method may be performed by a single respective component or system, such as by the control system (e.g., the processor) disclosed herein. In additional or alternative embodiments, multiple components or systems may perform the operations for a single one of the methods. It should also be noted that additional operations may be performed with respect to the described methods. Moreover, certain operations of the depicted methods may be removed, modified, and/or performed in a different order. Further still, the operations of any of the respective methods may be performed in parallel with one another, such as at the same time and/or in response to one another.

FIG. 6 is a flowchart of an embodiment of a method 370 for operating the agricultural system of FIG. 1 based on a characteristic of the MOG processed by the agricultural system of FIG. 1. At block 372, an indication of a MOG (e.g., stalk) characteristic is received. For example, the indication may be received via sensor data, such as from a radar sensor that detects a characteristic of multiple rows of crops using an emitted signal that penetrates the rows of crops. The MOG characteristic may be additionally or alternatively associated with crop discharged by the header of the agricultural system and/or distributed onto the field by the agricultural system.

At block 374, the MOG characteristic is determined to be outside of a range of values. The range of values may indicate a desirable MOG characteristic, such as a characteristic associated with MOG processed by the agricultural system in a desirable manner. Thus, the MOG characteristic being outside of the range of values may indicate that the agricultural system does not desirably process the MOG.

At block 376, a control signal is output in response to determining the MOG characteristic is outside of the range of values. The control signal may be output to adjust operation of the agricultural system, such as to adjust the MOG characteristic toward the range of values. Additionally or alternatively, the control signal may be output to provide a notification, which may prompt a user to manually adjust operation of the agricultural system and/or inspect the agricultural system.

In some embodiments, the MOG characteristic may include a size of the MOG discharged by the agricultural system onto the field, and the size of the MOG being outside of the range of values may indicate the size of the MOG exceeding a threshold value (e.g., a threshold length). In response, the control signal may be output to reduce the size of the MOG, such as to increase the speed of the chopper (e.g., relative to the speed of the feed rollers), move the counter knife to increase extension of the counter knife toward the front end of the header, or a combination thereof. The size of the MOG discharged by the agricultural system being below a threshold value may indicate that excessive power is used by the agricultural system to cut the MOG. In response, the control signal may be output to reduce power utilized to cut the MOG, such as to reduce the speed of the chopper (e.g., relative to the speed of the feed rollers), thereby creating relatively larger cut the MOG.

Additionally or alternatively, the MOG characteristic may include a distribution of the MOG on the field, and the distribution of the MOG being outside of the range of values may indicate a concentration of the MOG exceeding a threshold value (e.g., a threshold area percentage occupied by the MOG relative to a total area, a threshold volume percentage occupied by the MOG relative to a total volume). In response, the control signal may be output to increase distribution of the MOG, such as to increase operation of the MOG spreading system and/or to reduce the size of the MOG via the techniques described herein to facilitate distribution of the MOG. The distribution of the MOG being outside of the range of values may additionally or alternatively indicate concentration of the MOG being below a threshold value to indicate the MOG spreading system may use excessive power to operate. Thus, the operation (e.g., an operating speed of a spreader) of the MOG spreading system may be reduced in response.

In further embodiments, the MOG characteristic may be associated with the MOG (e.g., stalks) that remains in the soil after a crop is cut (e.g., the MOG that is not gathered and processed by the header). For example, in response to the MOG being above a threshold height, thereby indicating possible bending of the crop prior to being cut by the header, the control signal may be output to reduce travel speed of the agricultural system to facilitate cutting of the crop without causing the crop to bend.

Multiple MOG characteristics may be monitored, and multiple respective control signals may be output in response to each MOG characteristic determined to be outside of a corresponding range of values. For example, control signals may be output to adjust respective, corresponding operations of the agricultural system based on the MOG characteristics. Indeed, multiple operational adjustments may adjust multiple MOG characteristics toward the corresponding ranges of values to improve processing of the MOG in different aspects.

In some embodiments, the components of various row units may be adjusted independently of one another, and characteristic(s) of the MOG processed by each row unit are respectively determined. For example, the size of MOG discharged by a first row unit may be determined to exceed a threshold value. In response, the speed of the chopper (e.g., relative to the speed of the feed rollers) of the first row unit may be increased, the counter knife of the first row unit may be moved to increase extension of the counter knife toward the front end, or a combination thereof. However, operation of the components of a second row unit may not be adjusted in response to determining the size of the MOG discharged by the second row unit does not exceed the threshold value. In this way, specific components of the agricultural system may be operated to process the MOG in an efficient manner.

A method similar to the method 370 may also be performed to initially adjust operation based on characteristic(s) of upcoming crops yet to be processed by the agricultural system. For example, the characteristic(s) may include a biomass, dimension(s) (e.g., a width, a length, a height, a volume, an area), a quantity of rows, any other suitable characteristic(s) associated with the upcoming crops, or a combination thereof, may be determined. As previously discussed, the characteristic(s) of the upcoming crops may be determined based on feedback from the sensor(s) (e.g., an indication of the characteristic(s) may be received from sensor(s)). Additionally or alternatively, the characteristic(s) of the upcoming crops may be determined based on information from a previous operation (e.g., planting operation, etc.), including the planting rate (e.g., the spacing between plants within a row), etc. (e.g., an indication of the characteristic(s) may be received from an external source, such as a planter). A control signal may be output to initially adjust operation of any component to process the upcoming crops having the characteristic(s) in a desirable manner, such as to increase cutting of the upcoming crops (e.g., to increase speed of the chopper, to increase extension of the counter knife toward the front end) in response to determining the upcoming crops have an increased size, thereby effectively reducing the MOG from the crop having the increased size into sufficiently small particles. The operation may then further be adjusted based on how the crop is processed after initial adjustment of the operation of the agricultural system, such as based on whether the MOG discharged by the agricultural system is of a desirable size and/or is distributed as desired.

FIG. 7 is a flowchart of an embodiment of a method 400 for operating the agricultural system of FIG. 1 based on congestion of crop material processed by the agricultural system of FIG. 1. At block 402, an indication of a detected congestion (e.g., blockage) of crop material within the agricultural system and/or between the field and the agricultural system, such as crops gathered by the agricultural system, the MOG discharged by the agricultural system, the MOG distributed onto the field by the agricultural system, or a combination thereof, are received. The indication may be received via sensor data in some embodiments. For example, the sensor data may be received as optical information associated with positioning of crop material, volume of crop material at different locations relative to the agricultural system, force imparted by crop material onto a portion of the agricultural system, and the like.

At block 404, the location of the detected congestion is determined. For example, the detected congestion may be determined to be within a row unit, at the MOG spreading system, on the field underneath the agricultural system (e.g., at an underside of the agricultural system), and so forth. The detected congestion affects operation of the agricultural system, such as the ability of the agricultural system to process further crops and/or to travel along the field.

At block 406, a control signal is output based on the location of the detected congestion. As an example, in response to the detected congestion being at a row unit, the components of the header may be adjusted. For instance, the control signal may increase the speed of the feed rollers, increase the speed of the chains, increase the speed of the chopper, increase the speed of the conveyors, or a combination thereof, thereby increasing a rate at which the row unit processes crops. The control signal may adjust operation of components of respective row units independently of one another, such as based on the particular row unit having a detected congestion, to operate the agricultural system more effectively in response to a detected congestion. As another example, in response to the detected congestion being at the MOG spreading system, the control signal may adjust operation of the MOG spreading system or another component (e.g., the thresher) that transports the MOG to the MOG spreading system to increase distribution of the MOG onto the field. As a further example, in response to the congestion being between the field and the agricultural system, the control signal may adjust operation of the air mover to move the crop material underneath the agricultural system. In this manner, the control signal automatically adjusts operation of the agricultural system (e.g., without receipt of a user input) to address the congestion.

Further still, the control signal may effectuate another operation of the agricultural system. For example, the control signal may cause a notification to be presented to a user and may indicate the location of the congestion to the user. The user may then be prompted to manually adjust operation of the agricultural system and/or inspect the agricultural system to address the congestion.

## Claims

1. An agricultural system (100), wherein the agricultural system (100) comprises:
a header (200) comprising:
a feed roller (260) configured to engage a crop and to drive material other than grain (MOG) of the crop toward a field; and
a chopper (300) configured to cut the MOG driven toward the field by the feed roller (260) for discharge from the agricultural system (100); and
**characterized in that** the agricultural system (100) further comprises:
at least one sensor (126) and a control system (120) that is communicatively coupled to the at least one sensor (126), the at least one sensor (126) being configured to transmit sensor data indicative of a size of the MOG discharged from the agricultural system (100) to the control system (120), the control system (120) being configured to output a control signal to adjust a speed of the chopper (300) relative to a speed of the feed roller (260) based on the size of the MOG discharged from the agricultural system (100).

2. The agricultural system (100) of claim 1, wherein the control system (120) is configured to output the control signal to increase the speed of the chopper (300) relative to the speed of the feed roller (260) in response to determining the size of the MOG discharged from the agricultural system (100) is above a threshold value.

3. The agricultural system (100) of claim 1 or 2, wherein the at least one sensor (126) comprises an optical sensor, a radar sensor, a lidar sensor, a terahertz sensor, or a combination thereof.

4. The agricultural system (100) of any of claims 1-3, wherein the header (200) comprises a counter knife (302) configured to support the MOG being cut by the chopper (300), and the control system (120) is configured to output an additional control signal to adjust a position of the counter knife (302) based on the size of the MOG discharged from the agricultural system (100).

5. The agricultural system (100) of claim 4, wherein the control system (120) is configured to output the additional control signal to increase extension of the counter knife (302) toward a front end (304) of the header (200) in response to determining the size of the MOG discharged from the agricultural system (100) is above a threshold size value.

6. The agricultural system (100) of any of claims 1-5, wherein the at least one sensor (126) is further configured to output sensor data indicative of a detected congestion, and wherein the control system (120) is configured to:
receive the sensor data indicative of the detected congestion; and
output a subsequent control signal to increase the speed of the feed roller (260) in response to receiving the indication of the detected congestion.

7. The agricultural system (100) of claim 6, wherein the control system (120) is configured to operate an air mover (128) of the agricultural system (100) to move the MOG discharged from the agricultural system (100) in response to receiving the indication that the congestion is between the field and the agricultural system (100).

8. The agricultural system (100) of any of claims 1-7, wherein the control system (120) is configured to:
receive a selection of an operating mode of a plurality of operating modes, wherein each operating mode of the plurality of operating modes is associated with a corresponding, respective operational adjustment of the agricultural system (100); and
output another control signal to adjust operation of the agricultural system (100) in accordance with the corresponding, respective operational adjustment associated with the selected operating mode.

9. The agricultural system (100) of any of claims 1-8, wherein the control system (120) is configured to:
receive an indication of a characteristic of an upcoming crop to be harvested by the agricultural system (100); and
output a further control signal to adjust operation of the agricultural system (100) based on the characteristic of the upcoming crop.

10. The agricultural system (100) of claim 9, wherein the characteristic of the upcoming crop comprises a size, and the control system (120) is configured to output the further control signal to adjust the speed of the chopper (300) based on the size.

11. The agricultural system (100) of any of claims 1-10, wherein the control system (120) is configured to:
determine a height of additional MOG remaining on the field as a result of the crop being engaged by the feed roller (260); and
output a supplemental control signal to reduce a travel speed of the agricultural system (100) in response to determining the height of the additional MOG is above a threshold height value.

12. The agricultural system (100) of any of claims 1-11, wherein the agricultural system (100) comprises a thresher (108) configured to receive crop material from the header (200) and to separate desirable crop material from additional MOG, the control system (120) is communicatively coupled to the thresher (108), and the control system (120) is configured to:
determine an amount of the crop material received at the thresher (108); and
output an alternative control signal to adjust operation of the thresher (108) based on the amount of the crop material.

13. The agricultural system (100) of claim 12, wherein the control system (120) is configured to:
determine the amount of the crop material is above a threshold crop material value; and
output the alternative control signal to increase a processing speed of the thresher (108) to increase operation of the thresher (108) to separate the desirable crop material from the additional MOG.

14. The agricultural system (100) of any of claims 1-13, wherein the control system (120) is configured to output a new control signal to reduce the speed of the chopper (300) in response to determining the size of the MOG discharged from the agricultural system (100) is below a threshold size.

## Patentansprüche

1. Landwirtschaftliches System (100), wobei das landwirtschaftliche System (100) aufweist:
einen Erntevorsatz (200) mit:
einer Zuführwalze (260), die dazu eingerichtet ist, eine Erntepflanze zu erfassen und Nichtkornbestandteile (material other than grain; MOG) der Erntepflanze in Richtung eines Feldes zu bewegen; und
einem Häcksler (300), der dazu eingerichtet ist, das durch die Zuführwalze (260) in Richtung des Feldes bewegte MOG zu zerkleinern und aus dem landwirtschaftlichen System (100) auszutragen; und
**dadurch gekennzeichnet, dass** das landwirtschaftliche System (100) des Weiteren aufweist:
mindestens einen Sensor (126) und ein Steuersystem (120), das mit dem mindestens einen Sensor (126) kommunikativ gekoppelt ist, wobei der mindestens eine Sensor (126) dazu eingerichtet ist, Sensordaten zu übertragen, die eine Größe des aus dem landwirtschaftlichen System (100) ausgetragenen MOG anzeigen, und wobei das Steuersystem (120) dazu eingerichtet ist, ein Steuersignal auszugeben, um eine Geschwindigkeit des Häckslers (300) relativ zur Geschwindigkeit der Zuführwalze (260) basierend auf der Größe des ausgetragenen MOG einzustellen.

2. Landwirtschaftliches System (100) nach Anspruch 1, wobei das Steuersystem (120) dazu eingerichtet ist, das Steuersignal auszugeben, um die Geschwindigkeit des Häckslers (300) relativ zur Geschwindigkeit der Zuführwalze (260) zu erhöhen, wenn festgestellt wird, dass die Größe des ausgetragenen MOG über einem Schwellenwert liegt.

3. Landwirtschaftliches System (100) nach Anspruch 1 oder 2, wobei der mindestens eine Sensor (126) einen optischen Sensor, einen Radarsensor, einen Lidar-Sensor, einen Terahertz-Sensor oder eine Kombination davon aufweist.

4. Landwirtschaftliches System (100) nach einem der Ansprüche 1-3, wobei der Erntevorsatz (200) ein Gegenschneidmesser (302) aufweist, das dazu eingerichtet ist, das durch den Häcksler (300) geschnittene MOG zu stützen, und wobei das Steuersystem (120) dazu eingerichtet ist, ein zusätzliches Steuersignal auszugeben, um eine Position des Gegenschneidmessers (302) basierend auf der Größe des ausgetragenen MOG einzustellen.

5. Landwirtschaftliches System (100) nach Anspruch 4, wobei das Steuersystem (120) dazu eingerichtet ist, das zusätzliche Steuersignal auszugeben, um das Gegenschneidmesser (302) weiter in Richtung einer Vorderseite (304) des Erntevorsatzes (200) zu erstrecken, wenn festgestellt wird, dass die Größe des ausgetragenen MOG über einem Schwellenwert liegt.

6. Landwirtschaftliches System (100) nach einem der Ansprüche 1-5, wobei der mindestens eine Sensor (126) des Weiteren dazu eingerichtet ist, Sensordaten auszugeben, die eine erkannte Verstopfung anzeigen, und wobei das Steuersystem (120) dazu eingerichtet ist:
die Sensordaten zu empfangen, die die erkannte Verstopfung anzeigen, und
ein nachfolgendes Steuersignal auszugeben, um die Geschwindigkeit der Zuführwalze (260) als Antwort auf ein Empfangen der Angabe einer erkannten Verstopfung zu erhöhen.

7. Landwirtschaftliches System (100) nach Anspruch 6, wobei das Steuersystem (120) dazu eingerichtet ist, ein Luftförderelement (128) des landwirtschaftlichen Systems (100) zu betreiben, um das ausgetragene MOG zu bewegen, wenn die Anzeige empfangen wird, dass die Verstopfung zwischen dem Feld und dem landwirtschaftlichen System (100) auftritt.

8. Landwirtschaftliches System (100) nach einem der Ansprüche 1-7, wobei das Steuersystem (120) dazu eingerichtet ist:
eine Auswahl eines Betriebsmodus aus einer Vielzahl von Betriebsmodi zu empfangen, wobei jeder Betriebsmodus mit einer entsprechenden, jeweiligen Betriebseinstellung des landwirtschaftlichen Systems (100) verknüpft ist; und
ein weiteres Steuersignal auszugeben, um den Betrieb des landwirtschaftlichen Systems (100) gemäß der jeweiligen Betriebseinstellung des ausgewählten Betriebsmodus anzupassen.

9. Landwirtschaftliches System (100) nach einem der Ansprüche 1-8, wobei das Steuersystem (120) dazu eingerichtet ist:
eine Anzeige einer Eigenschaft einer bevorstehenden zu erntenden Erntepflanze zu empfangen; und
ein weiteres Steuersignal auszugeben, um den Betrieb des landwirtschaftlichen Systems (100) basierend auf der Eigenschaft der bevorstehenden Erntepflanze anzupassen.

10. Landwirtschaftliches System (100) nach Anspruch 9, wobei die Eigenschaft der bevorstehenden Erntepflanze eine Größe aufweist, und wobei das Steuersystem (120) dazu eingerichtet ist, das weitere Steuersignal auszugeben, um die Geschwindigkeit des Häckslers (300) basierend auf der Größe anzupassen.

11. Landwirtschaftliches System (100) nach einem der Ansprüche 1-10, wobei das Steuersystem (120) dazu eingerichtet ist:
eine Höhe von zusätzlichem MOG zu bestimmen, das als Folge der Erfassung der Erntepflanze durch die Zuführwalze (260) auf dem Feld verbleibt; und
ein ergänzendes Steuersignal auszugeben, um die Fahrgeschwindigkeit des landwirtschaftlichen Systems (100) zu reduzieren, wenn festgestellt wird, dass die Höhe des zusätzlichen MOG über einem Schwellenwert liegt.

12. Landwirtschaftliches System (100) nach einem der Ansprüche 1-11, wobei das landwirtschaftliche System (100) eine Dreschvorrichtung (108) aufweist, die dazu eingerichtet ist, Erntematerial vom Erntevorsatz (200) zu empfangen und erwünschtes Erntematerial von zusätzlichem MOG zu trennen, wobei das Steuersystem (120) kommunikativ mit der Dreschvorrichtung (108) gekoppelt und dazu eingerichtet ist:
eine Menge des an der Dreschvorrichtung (108) empfangenen Erntematerials zu bestimmen; und
ein alternatives Steuersignal auszugeben, um den Betrieb der Dreschvorrichtung (108) basierend auf der Menge des Erntematerials anzupassen.

13. Landwirtschaftliches System (100) nach Anspruch 12, wobei das Steuersystem (120) dazu eingerichtet ist:
zu bestimmen, dass die Menge des Erntematerials über einem Schwellenwert liegt; und
das alternative Steuersignal auszugeben, um eine Verarbeitungsgeschwindigkeit der Dreschvorrichtung (108) zu erhöhen, um die Trennung des erwünschten Erntematerials vom zusätzlichen MOG zu verbessern.

14. Landwirtschaftliches System (100) nach einem der Ansprüche 1-13, wobei das Steuersystem (120) dazu eingerichtet ist, ein neues Steuersignal auszugeben, um die Geschwindigkeit des Häckslers (300) zu reduzieren, wenn festgestellt wird, dass die Größe des ausgetragenen MOG unter einem Schwellenwert liegt.

## Revendications

1. Un système agricole (100), dans lequel le système agricole (100) comprend :
un organe de coupe (200) comprenant :
un cylindre d'alimentation (260) configuré pour mettre en prise une récolte et pour entraîner le matériau autre que le grain (MOG) de la récolte vers un champ ; et
un dispositif de hachage (300) configuré pour couper le MOG entraîné vers le champ par le cylindre d'alimentation (260) afin de le décharger du système agricole (100) ; et
**caractérisé en ce que** le système agricole (100) comprend en outre :
au moins un capteur (126) et un système de commande (120) qui est couplé de manière communicative à l'au moins un capteur (126), l'au moins un capteur (126) étant configuré pour transmettre des données de capteur indiquant une taille du MOG déchargé du système agricole (100) au système de commande (120), le système de commande (120) étant configuré pour émettre un signal de commande afin d'ajuster une vitesse du dispositif de hachage (300) par rapport à une vitesse du cylindre d'alimentation (260) en fonction de la taille du MOG déchargé du système agricole (100).

2. Le système agricole (100) selon la revendication 1, dans lequel le système de commande (120) est configuré pour émettre le signal de commande afin d'augmenter la vitesse du dispositif de hachage (300) par rapport à la vitesse du cylindre d'alimentation (260) en réponse à la détermination que la taille du MOG déchargé du système agricole (100) est supérieure à une valeur seuil.

3. Le système agricole (100) selon la revendication 1 ou la revendication 2, dans lequel l'au moins un capteur (126) comprend un capteur optique, un capteur radar, un capteur lidar, un capteur térahertz, ou une combinaison de ceux-ci.

4. Le système agricole (100) selon l'une quelconque des revendications 1 à 3, dans lequel l'organe de coupe (200) comprend un contre-couteau (302) configuré pour soutenir le MOG coupé par le dispositif de hachage (300), et le système de commande (120) est configuré pour émettre un signal de commande supplémentaire afin d'ajuster une position du contre-couteau (302) en fonction de la taille du MOG déchargé du système agricole (100).

5. Le système agricole (100) selon la revendication 4, dans lequel le système de commande (120) est configuré pour émettre le signal de commande supplémentaire afin d'augmenter l'extension du contre-couteau (302) vers une extrémité avant (304) de l'organe de coupe (200) en réponse à la détermination que la taille du MOG déchargé du système agricole (100) est supérieure à une valeur seuil de taille.

6. Le système agricole (100) selon l'une quelconque des revendications 1 à 5, dans lequel l'au moins un capteur (126) est en outre configuré pour émettre des données de capteur indiquant la détection d'une obstruction, et dans lequel le système de commande (120) est configuré pour :
recevoir les données de capteur indiquant l'obstruction détectée ; et
émettre un signal de commande ultérieur pour augmenter la vitesse du cylindre d'alimentation (260) en réponse à la réception de l'indication de détection de l'obstruction.

7. Le système agricole (100) selon la revendication 6, dans lequel le système de commande (120) est configuré pour faire fonctionner un dispositif de ventilation (128) du système agricole (100) afin de déplacer le MOG déchargé du système agricole (100) en réponse à la réception de l'indication que l'obstruction se trouve entre le champ et le système agricole (100).

8. Le système agricole (100) selon l'une quelconque des revendications 1 à 7, dans lequel le système de commande (120) est configuré pour :
recevoir une sélection d'un mode de fonctionnement parmi une pluralité de modes de fonctionnement, dans lequel chaque mode de fonctionnement parmi la pluralité de modes de fonctionnement est associé à un ajustement fonctionnel respectif correspondant du système agricole (100) ; et
émettre un autre signal de commande pour ajuster le fonctionnement du système agricole (100) conformément à l'ajustement fonctionnel respectif correspondant associé au mode de fonctionnement sélectionné.

9. Le système agricole (100) selon l'une quelconque des revendications 1 à 8, dans lequel le système de commande (120) est configuré pour :
recevoir une indication d'une caractéristique d'une culture à venir devant être récoltée par le système agricole (100) ; et
émettre un autre signal de commande pour ajuster le fonctionnement du système agricole (100) en fonction de la caractéristique de la récolte à venir.

10. Le système agricole (100) selon la revendication 9, dans lequel la caractéristique de la récolte à venir comprend une taille, et le système de commande (120) est configuré pour émettre l'autre signal de commande afin d'ajuster la vitesse du dispositif de hachage (300) en fonction de la taille.

11. Le système agricole (100) selon l'une quelconque des revendications 1 à 10, dans lequel le système de commande (120) est configuré pour :
déterminer une hauteur de MOG supplémentaire restant dans le champ suite à la mise en prise de la récolte par le cylindre d'alimentation (260) ; et
émettre un signal de commande supplémentaire pour réduire une vitesse de déplacement du système agricole (100) en réponse à la détermination que la hauteur du MOG supplémentaire est supérieure à une valeur seuil de hauteur.

12. Le système agricole (100) selon l'une quelconque des revendications 1 à 11, dans lequel le système agricole (100) comprend une batteuse (108) configurée pour recevoir le matériau récolté de la part de l'organe de coupe (200) et pour séparer le matériau récolté souhaitable du MOG supplémentaire, le système de commande (120) est couplé de manière communicative à la batteuse (108), et le système de commande (120) est configuré pour :
déterminer une quantité de matériau récolté reçu par la batteuse (108) ; et
émettre un signal de commande alternatif pour ajuster le fonctionnement de la batteuse (108) en fonction de la quantité de matériau récolté.

13. Le système agricole (100) selon la revendication 12, dans lequel le système de commande (120) est configuré pour :
déterminer que la quantité de matériau récolté est supérieure à une valeur seuil de matériau récolté ; et
émettre le signal de commande alternatif pour augmenter une vitesse de traitement de la batteuse (108) afin d'augmenter le fonctionnement de la batteuse (108) pour séparer le matériau récolté souhaitable du MOG supplémentaire.

14. Le système agricole (100) selon l'une quelconque des revendications 1 à 13, dans lequel le système de commande (120) est configuré pour émettre un nouveau signal de commande afin de réduire la vitesse du dispositif de hachage (300) en réponse à la détermination que la taille du MOG déchargé du système agricole (100) est inférieure à une taille seuil.
